# EUROPÄISCHE PATENTANMELDUNG

(11) **EP 0 687 824 A1**
(43) Veröffentlichungstag der Anmeldung: **20.12.1995**
(21) Anmeldenummer: 95108560.4
(22) Anmeldetag: 03.06.1995
(51) Int. Cl.: F16C 13/00

(54) **Stützelement**

(30) Priorität: 09.06.1994 DE 4420104
(71) Anmelder: Voith Sulzer Papiermaschinen GmbH, 89509 Heidenheim (DE)
(72) Erfinder: Renn, Sandra, D-88214 Ravensburg (DE)

(57) **Zusammenfassung**

Die Erfindung betrifft ein Stützelement (1) zur Abstützung eines bandförmigen Elementes (3) gegenüber einem feststehenden Träger (4), wobei sich das Element (3) um diesen bewegt. Dabei soll insbesondere ein Temperaturausgleich am Stützelement (1) mit einfachen Mitteln bewirkt werden.

Erreicht wird dies dadurch, daß sich das Stützelement (1) in einem Fluidsammelbehälter (5) befindet, der so gestaltet ist, daß das Fluid thermisch gut leitend mit dem thermisch ungleichmäßig beanspruchten Teil des Stützelementes (1) verbunden ist.

## Beschreibung

Die Erfindung betrifft ein Stützelement der im Oberbegriff des Anspruchs 1 beschriebenen Art. Derartige Vorrichtungen finden insbesondere bei der Herstellung oder Behandlung von Materialbahnen Anwendung.

Wegen der Schmierung der Stützelemente ist der Raum zwischen dem bandförmigen Element und dem Träger meist teilweise mit dem Schmiermittel gefüllt. Vor allem bei hohen Bahngeschwindigkeiten kommt es wegen der Verwirbelung des Schmiermittels durch die nicht umlaufenden Stützelemente zu einem erheblichen Verlust von Antriebsleistung, was zu einer Erwärmung des Schmiermittels führt. Besonders nachteilig wirkt sich dies bei Walzen aus, die eine relativ kalte Oberfläche aufweisen müssen oder bei denen das Material des bandförmigen Elementes eine Erwärmung nicht verträgt.

Begegnet wurde dem bisher durch eine Kühlung des Schmiermittels außerhalb der Walze, was natürlich energetisch von Nachteil ist. Außerdem wurde in der EP 579 930 vorgeschlagen, die Stützelemente mit in Umfangsrichtung der Walze verlaufenden Strömungskanälen zu versehen. Dies ist allerdings immer noch nicht befriedigend.

Hinzu kommt, daß sich das Schmierfluid bedingt durch die Reibung zwischen dem bandförmigen Element und dem Stützelement erwärmt. Kommen mehrere Stützelemente zur Anwendung, so können deren Stützflächen bei verschiedenen Anpreßkräften über die Materialbahnbreite unterschiedliche Temperaturen besitzen, was sich negativ auf die Gleichförmigkeit der Materialbahn auswirken kann.

Auch an jedem Stützelement selbst können sich Temperaturunterschiede entwickeln, insbesondere ist dies in Bezug auf den Einlauf und den Auslauf des Schmierspaltes gültig. Diese durch die Erwärmung des Schmierfluids auf seinem Weg verursachte Temperaturdifferenz führt wiederum zu Verformung des Stützelementes, was sich negativ auf dessen Funktion auswirkt.

Aus diesem Grund wird in der DE-OS 39 25 019 vorgeschlagen, das Stützelement mit einer Temperaturausgleichsleitung zu versehen, durch die dem Stützelement entsprechend temperiertes Fluid bis zur Innenfläche des Walzenmantels heranführbar ist. Eine derartige Lösung ist allerdings konstruktiv relativ aufwendig.

In der DE-PS 35 28 333 wird eine Walze mit einem sich über die gesamte Walzenlänge erstreckenden Stützschuh beschrieben. Die hierbei zur Anwendung kommenden Leckkammern sorgen lediglich für einen Temperaturausgleich entlang der Walze und sind daher ungeeignet.

Der Erfindung liegt daher die Aufgabe zugrunde, mit konstruktiv einfachen Maßnahmen einen Temperaturausgleich am Stützelement, insbesondere hinsichtlich Ein- und Auslauf des Schmierspaltes, zu bewirken und möglichst auch neben einer Temperaturbeeinflussung des Stützelementes die Unerwünschten Verwirbelungsverluste zu verringern.

Erfindungsgemäß wurde die Aufgabe durch die im Anspruch 1 beschriebene Vorrichtung gelöst, wobei die Unteransprüche besondere Ausführungsformen darstellen.

Dadurch, daß sich das Stützelement allein oder gemeinsam mit anderen Stützelementen in einem Fluidsammelbehälter befindet, dessen offene Seite zur abzustützenden Fläche des bandförmigen Elementes weist und der so gestaltet ist, daß das Fluid in ihm thermisch gut leitend mit dem ansonsten thermisch in ungewünschter Weise beanspruchten Teil des Stützelementes in Verbindung steht und das Fluid in dem Sammelbehälter keinen Druck auf die abzustützende Fläche ausüben kann, gelingt es, die Temperatur an den gewünschten Stellen des Stützelementes auszugleichen und somit insbesondere einer Verformung des Stützelementes entgegenzuwirken. Damit das Fluid das oder die Stützelemente möglichst ganz umströmen kann und ein Temperaturausgleich innerhalb des gesamten Fluids ermöglicht wird, ist es notwendig, daß der in Bewegungsrichtung des bandförmigen Elementes vor mit dem nach dem Stützelement vorhandenen Teil des Fluidsammelbehälters über zumindest einen durch das Stützelement verlaufenden und/oder um das Stützelement herumführenden Kanal verbunden ist, wobei es entlang des Trägers der Walze mindestens zwei derartige Kanäle gibt. Diese Verbindungen sollten daher auch einen geringen Strömungswiderstand aufweisen. Um neben dem Temperaturausgleich am Stützelement entlang des Trägers auch in Bewegungsrichtung des bandförmigen Elementes einen besonders wirkungsvollen Temperaturausgleich zu gewährleisten, sollte es entlang des Trägers mindestens drei Kanäle geben, die vorzugsweise annähernd den gleichen Abstand voneinander haben. Dieser Abstand zwischen den Kanälen sollte vorzugsweise zwischen 10 und 250 mm liegen. Außerdem erlaubt die Bedingung, daß vom gesammelten Fluid kein Druck auf die abzustützende Fläche ausgehen soll, eine sehr einfache Gestaltung des Fluidsammelbehälters, da u.a. eine druckfeste Abdichtung gegenüber der abzustützenden Fläche entfällt. In Ergänzung dessen kommt es auch nicht zu einer Verfälschung der von den Stützelementen ausgehenden Druckwirkung.

Für den Fall, daß der Fluidsammelbehälter einen direkt aus der Walze führenden Ablauf besitzt, kann man zusätzlich verhindern, daß sich der Raum zwischen dem bandförmigen Element und dem Träger mit dem Schmierfluid füllt. Dies wiederum hat zur Folge, daß es gar nicht erst zu einer Verwirbelung und damit auch zu einer Erwärmung des Schmiermittels kommt.

Um das schmierende Fluid vom bandförmigen Element entfernen zu können, empfehlen sich dem Stützelement in Bewegungsrichtung des bandförmigen Elementes nachfolgende Abstreifeinrichtungen, an denen das Fluid in den Fluidsammelbehälter gelangt. Sollen beide Bewegungsrichtungen des bandförmigen Elementes möglich sein, so sind dementsprechend an beiden Enden des Stützelementes Abstreifeinrichtungen vorzusehen. Es ist natürlich auch möglich, stattdessen das Stützelement selbst zur Abführung des Fluids am Einlaufspalt zu verwenden.

Zur Steuerung der Füllhöhe des Fluids im Fluidsammelbehälter kann derselbe mit einem gesteuerten Ablauf versehen sein. Dies ermöglicht es, den Wärmefluß zwischen bestimmten Stellen des Stützelementes und dem gesammelten Fluid zu beeinflussen. In Ergänzung dessen oder für sich allein kann der Fluidsammelbehälter auch einen steuerbaren Zulauf für ein temperiertes, vorzugsweise gekühltes Fluid besitzen. Dies erlaubt es nicht nur, die Fluidhöhe sondern auch in entscheidendem Maße die Temperatur des Fluids zu beeinflussen. Somit bietet sich als Kriterium für diese Steuerung des Ab- bzw. Zulaufs die Füllhöhe und/oder die Temperatur des Fluids an.

Neben den verbindenden Kanälen durch oder um die Stützelemente herum können natürlich auch noch andere die Zirkulation des Fluids fördernde Einbauten vorgesehen sein. Es ist in diesem Zusammenhang beispielsweise von Vorteil, wenn Zu- und Abfluß auf verschiedenen Seiten des Fluidsammelbehälters angeordnet sind, so daß sich allein chon dadurch eine Zirkulation des Fluids auch durch die Kanäle des Stützelementes ergibt.

Anwendung findet diese Erfindung nicht nur bei flexiblen bandförmigen Elementen, wie sie zum Beispiel zur Bildung von relativ langen Preßspalten verwendet werden, sondern auch bei Walzen, bei denen das bandförmige Element als relativ starrer Walzenmantel ausgebildet ist, der um einen feststehenden Träger rotiert.

Insbesondere dann, wenn das Stützelement in Bezug auf den Träger beweglich ist, kann es von Vorteil sein, wenn die Abstreifeinrichtung und/oder zumindest die Seitenwände des Fluidsammelbehälters mit dem Stützelement verbunden und mit diesem in Richtung des bandförmigen Elementes bewegbar sind. Damit kann auch eine Durchbiegung des Trägers relativ zum bandförmigen Element ausgegelichen werden. Bei der Realisierung diesen Merkmals ist es beispielsweise möglich, den gesamten Fluidsammelbehälter am Stützelement zu befestigen oder die Seitenwände bewegbar abgedichtet gegenüber dem Boden des Fluidsammelbehälters anzuordnen.

Nachstehend soll die Erfindung an zwei Ausführungsbeispielen näher erläutert werden. In der beigefügten Zeichnung zeigen:
- Fig. 1: eine Ausführungsform mit einem flexiblen bandförmigen Element und
- Fig. 2: eine andere Ausführungsform mit einer Walze, die einen relativ starren Walzenmantel besitzt.

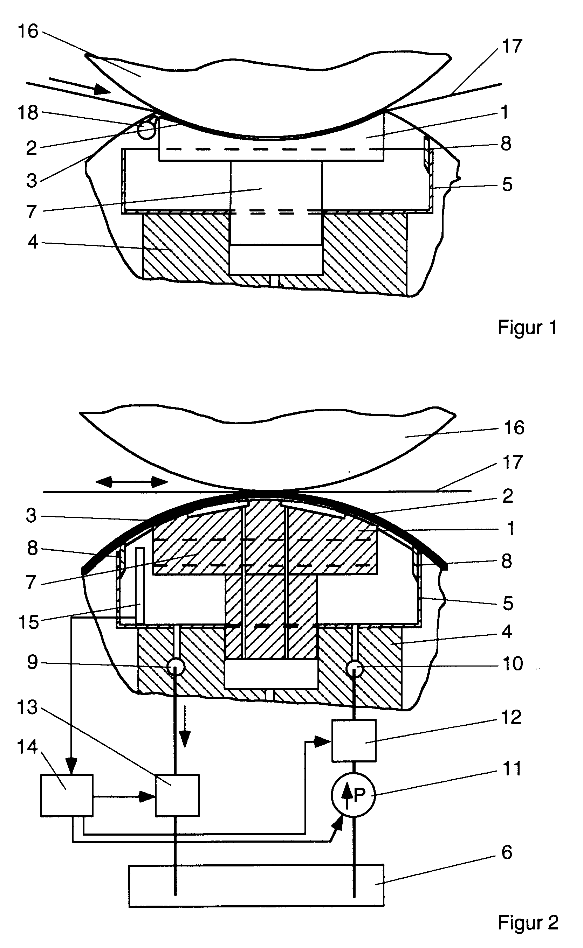

Wie in Fig. 1 zu sehen, wird das Stützelement 1 im ersten Ausführungsbeispiel über eine hydrodynamische Schmierung der Stützfläche 2 zur Abstützung eines endlosen, bandförmigen und flexiblen Elementes 3 gegenüber einem feststehenden in einer Stuhlung gelagerten Träger 4 verwendet. Natürlich ist es ohne weiteres möglich, daß die Stützfläche außerdem noch Lagertaschen für eine hydrostatische Schmierung besitzt. Dieses Element 3 hat folglich etwa die Form eines Schlauches und bewegt sich um den Träger 4. Das Element 3 kann an den Seiten des Schlauches verschlossen sein, so daß ein Austritt des Schmierfluids in andere Bereiche der Maschine oder auf die Materialbahn 17 verhindert wird.

Das Stützelement 1 bildet eine konkave Anpreßfläche, die gegen eine zylindrische Walze 16 gepreßt wird. Ein derartig verlängerter Preßspalt eignet sich besonders zur Entwässerung von Faserstoffbahnen.

Da die Abstützung mit einer überwiegenden Richtungskomponente entgegen der Schwerkraft erfolgt, ist es möglich, daß aus dem Spalt zwischen der Stützfläche 2 des Stützelementes 1 und der zugewandten Seite des bandförmigen Elementes 3 austretende Fluid, welches zur Schmierung benutzt wird, in einem Fluidsammelbehälter 5 aufzufangen, der nicht zwangsläufig gegenüber dem bandförmigen Element 3 abgedichtet sein muß. In diesem Beispiel erfolgt die Zugabe des Fluids über eine Schmiervorrichtung 18, die am Einlaufspalt des Stützelementes 1 angeordnet ist und somit eine hydrodynamische Schmierung gewährleistet.

Die Abstützung kann über mehrere entlang des Trägers 4 angeordnete Stützelemente 1 oder über ein einziges sich über die gesamte Breite der zu behandelnden Materialbahn 17 erstreckendes Stützelement 1 in Form einer Stützleiste erfolgen. Auf jeden Fall aber befindet sich jedes Stützelement 1 allein oder gemeinsam mit anderen in einem Fluidsammelbehälter 5, dessen offene Seite zur abzustützenden Fläche des bandförmigen Elementes 3 weist. Um das Stützelement 1 möglichst umfassend und gleichmäßig beeinflussen zu können, steht der in Bewegungsrichtung des bandförmigen Elementes 3 vor mit dem nach dem Stützelement 1 vorhandenen Teil des Fluidsammelbehälters 5 über zumindest einen um das Stützelement 1 herumführenden Kanal 7 in Verbindung.

Damit sich daraus die gewollte thermische Wirkung ergibt, muß das gesammelte Fluid gut leitend mit dem ansonsten thermisch in ungewünschter Weise beanspruchten Teil bzw. Teilen des Stützelementes 1 in Verbindung stehen. Hierbei ist u.a. auch die im Fluidsammelbehälter 5 erreichbare Fluidhöhe von Bedeutung. Diese kann durch einen Überlauf in den Raum zwischen dem bandförmigen Element 3 und dem Träger 4 beschränkt werden. Will man dies wegen der Verwirbelungsverluste nicht, so empfiehlt sich, wie in Fig. 2 gezeigt, ein Abfluß 9 direkt aus dieser Vorrichtung heraus.

Damit ein möglichst großer Teil des schmierenden Fluids in den Fluidsammelbehälter 5 kommt, befindet sich in Bewegungsrichtung des bandförmigen Elementes 3 nach dem Stützelement 1 eine Abstreifeinrichtung 8.

Figur 2 zeigt eine Ausführungsform, bei der das bandförmige Element 3 als Walzenmantel einer Walze ausgeführt ist, der um einen feststehenden Träger 4 rotiert. Diese Walze bildet mit einer gegenüberliegenden Walze 16 einen Behandlungsspalt für eine Materialbahn 17, beispielsweise wie beim Glätten von Faserstoffbahnen üblich.

Im Unterschied zum ersten Ausführungsbeispiel erfolgt hier die Schmierung zwischen dem bandförmigen Element 3 und der Stützfläche 2 des Stützelementes 1 auf hydrostatische Weise, d.h. über die Zuführung von Fluid aus dem Druckraum des Stützelementes 1 in Lagertaschen der Stützfläche 2. Meist sind dabei mehrere Stützelemente 1 nebeneinander entlang zum Träger 4 angeordnet, wobei das natürlich auch in Bewegungsrichtung des bandförmigen Elementes 3 möglich ist.

Da auch hier die Abstützung mit einer überwiegenden Richtungskomponente entgegen der Schwerkraft erfolgt, kann das überlaufende, schmierende Fluid der Stützelemente 1 ohne weiteres von einem oder mehreren Fluidsammelbehältern 5 aufgefangen werden. Für den Fall, daß die Abstützung in einer anderen Richtung erfolgt, kann sich eine Abdichtung des Fluidsammelbehälters 5 gegenüber dem bandförmigen Element 3 notwendig machen. In diesem Beispiel sollen sich zumindest mehrere, wenn nicht sogar alle Stützelemente 1 in einem Fluidsammelbehälter 5 befinden, dessen offene Seite zur abzustützenden Fläche des bandförmigen Elementes 3 weist. Dieser Fluidsammelbehälter 5 ist so gestaltet, daß das Fluid in ihm thermisch gut leitend mit den ansonsten thermisch in ungewünschter Weise beanspruchten Teilen des Stützelementes 1 in Verbindung steht. Dabei sind der in Bewegungsrichtung des bandförmigen Elementes 3 vor und nach den Stützelementen 1 vorhandene Teil des Fluidsammelbehälters 5 über durch die Stützelemente 1 verlaufende Kanäle 7 miteinander verbunden. Da hier keine bevorzugte Bewegungsrichtung besteht, ist vor und nach dem Stützelement je eine Abstreifeinrichtung 8 zum Führen des Fluids vom bandförmigen Element 3 in den Fluidsammelbehälter 5 vorhanden. Der Fluidsammelbehälter 5 ist ansonsten so gestaltet, daß sich kein Druck in ihm aufbauen kann, d.h. daß er - wenn überhaupt - auch nur dementsprechend gegenüber der abzustützenden Fläche des bandförmigen Elementes 3 abgedichtet ist.

Um die Fluidhöhe und damit unter Umständen den Wärmeübertragungswiderstand zu den gewünschten Stellen der Stützelemente 1 beeinflussen zu können, besitzt der Fluidsammelbehälter 5 einen Abfluß 9, dessen Abflußmenge durch ein Ventil 13 steuerbar ist. In Ergänzung dessen ist außerdem ein Zulauf 10 für ein temperiertes Fluid vorhanden. Damit läßt sich nicht nur die Füllhöhe des Fluids im Fluidsammelbehälter 5, sondern auch dessen Temperatur beeinflussen. Der Zulauf 10 wird von einer Pumpe 11 gespeist, die das Fluid aus einem Auffangbecken 6 bezieht. In dieses Auffangbecken 6 mündet zweckmäßigerweise der Ablauf 9. Im Zulauf 10 befindet sich außerdem noch eine Temperiervorrichtung 12, die das zuzuführende Fluid im allgemeinen abkühlt. Die Temperiervorrichtung 12 kann selbstverständlich auch an anderen Stellen im Fluidkreislauf angeordnet sein.

Die Ansteuerung des Ventiles 13, der Pumpe 11 und der Temperiervorrichtung 12 erfolgt über eine Steuereinheit 14, die Informationen über die Füllhöhe sowie die Temperatur des Fluids im Fluidsammelbehälter 5 von einer Meßeinheit 15 erhält.

Um eine ausreichende Zirkulation des Fluids im Fluidsammelbehälter 5 zu gewährleisten, befinden sich Ab- und Zulauf in Bezug auf eine Bewegungsrichtung des bandförmigen Elementes 3 auf verschiedenen Seiten des Stützelementes 1. Es ist aber auch denkbar, zusätzliche Einbauten in Form von ausgerichteten Düsen am Zulauf oder Pumpen im Fluidsammelbehälter 5 zur steuerbaren Förderung der Fluidzirkulation mit dem Ziel der Temperaturvergleichmäßigung des Fluids und somit auch der Stützelemente 1 vorzusehen.

Über die Steuerung des Temperaturniveaus läßt sich außerdem noch die Temperatur der Stützelemente 1 und damit auch des bandförmigen Elementes 3 axial zonenweise beeinflussen, was insbesondere beim Glättvorgang von Vorteil ist. Der Abstand zwischen den Kanälen 7 sollte vorzugsweise zwischen 10 und 250 mm liegen, was im allgemeinen zur Folge hat, daß bei der Verwendung nur weniger Stützelemente 1 die Kanäle 7 vorwiegend durch diese verlaufen.

## Patentansprüche

1. Stützelement (1) mit hydrostatischer und/oder hydrodynamischer Schmierung der Stützfläche (2) zur Abstützung eines endlosen, bandförmigen Elementes (3) gegenüber einem feststehenden Träger (4), wobei sich das Element (3) um diesen Träger (4) bewegt,
**dadurch gekennzeichnet**,
daß sich das Stützelement (1) allein oder gemeinsam mit anderen Stützelementen in einem Fluidsammelbehälter (5) befindet, dessen offene Seite zur abzustützenden Fläche des bandförmigen Elementes (3) weist und der so gestaltet ist, daß das Fluid in ihm thermisch gut leitend mit dem ansonsten thermisch in ungewünschter Weise beanspruchten Teil des Stützelementes (1) in Verbindung steht und das Fluid in dem Fluidsammelbehälter (5) keinen Druck auf die abzustützende Fläche des bandförmigen Elementes (3) ausüben kann und der in Bewegungsrichtung des bandförmigen Elementes (3) vor mit dem nach dem Stützelement (1) vorhandenen Teil des Fluidsammelbehälters (5) über zumindest einen durch das Stützelement (1) verlaufenden und/oder um das Stützelement (1) herumführenden Kanal (7) verbunden ist, wobei es entlang des Trägers (4) mindestens zwei derartige Kanäle (7) gibt.

2. Stützelement nach Anspruch 1,
**dadurch gekennzeichnet**,
daß es entlang des Trägers (4) mindestens drei Kanäle (7) gibt, die vorzugsweise annähernd den gleichen Abstand voneinander haben, der insbesondere zwischen 10 und 250 mm liegt.

3. Stützelement nach Anspruch 1 oder 2,
**dadurch gekennzeichnet**,
daß zumindest eine in Bewegungsrichtung des bandförmigen Elementes (3) dem Stützelement (1) nachgelagerte, das schmierende Fluid vom bandförmigen Element (3) in den Fluidsammelbehälter (5) führende Abstreifeinrichtung (8) vorhanden ist.

4. Stützelement nach einem der Ansprüche 1 bis 3,
**dadurch gekennzeichnet**,
daß bezüglich einer Bewegungsrichtung des bandförmigen Elementes (3) vor und nach dem Stützelement (1) eine Abstreifeinrichtung (8) vorgesehen ist.

5. Stützelement nach einem der Ansprüche 1 bis 4,
**dadurch gekennzeichnet**,
daß der Fluidsammelbehälter (5) einen vorzugsweise gesteuerten Ablauf (9) besitzt.

6. Stützelement nach einem der Ansprüche 1 bis 5,
**dadurch gekennzeichnet**,
daß der Fluidsammelbehälter (5) mit einem steuerbaren Zulauf (10) für ein temperiertes, vorzugsweise gekühltes Fluid versehen ist.

7. Stützelement nach Anspruch 5 oder 6,
**dadurch gekennzeichnet**,
daß die Steuerung des Ablaufes (9) bzw. Zulaufes (10) in Abhängigkeit von der Füllhöhe und/oder der Temperatur des Fluids im Fluidsammelbehälter (5) erfolgt.

8. Stützelement nach einem der Ansprüche 1 bis 7,
**dadurch gekennzeichnet**,
daß der Fluidsammelbehälter (5) die Zirkulation des Fluids fördernde Einbauten besitzt.

9. Stützelement nach einem der Ansprüche 1 bis 8,
**dadurch gekennzeichnet**,
daß das bandförmige Element (3) als Walzenmantel einer Walze ausgeführt ist, der um den feststehenden Träger (4) rotiert.

10. Stützelement nach einem der Ansprüche 1 bis 8,
**dadurch gekennzeichnet**,
daß das bandförmige Element (3) flexibel ist.

11. Stützelement nach einem der Ansprüch 1 bis 10,
**dadurch gekennzeichnet**,
daß die Abstreifeinrichtung (8) und/oder zumindest die Seitenwände des Fluidsammelbehälters (5) fest mit dem Stützelement (1) verbunden und mit diesem in Richtung des bandförmigen Elementes bewegbar sind.

12. Stützelement nach einem der Ansprüche 1 bis 11,
**dadurch gekennzeichnet**,
daß die Temperatur des Fluids im Fluidsammelbehälter (5) zur zonenweisen Temperaturbeeinflussung des bandförmigen Elementes (3) gesteuert wird.
